(19) Europäisches Patentamt / European Patent Office / Office européen des brevets

(11) **EP 4 564 579 A1**

(12) **EUROPEAN PATENT APPLICATION**
published in accordance with Art. 153(4) EPC

(43) Date of publication:
**04.06.2025 Bulletin 2025/23**

(21) Application number: **23846451.5**

(22) Date of filing: **24.07.2023**

(51) International Patent Classification (IPC):
*H01M 50/466* (2021.01)   *H01M 50/414* (2021.01)
*H01M 50/417* (2021.01)   *H01M 50/437* (2021.01)
*H01M 50/44* (2021.01)    *H01M 50/489* (2021.01)
*H01M 50/494* (2021.01)

(52) Cooperative Patent Classification (CPC):
**H01M 50/414; H01M 50/417; H01M 50/437;
H01M 50/44; H01M 50/466; H01M 50/489;
H01M 50/494; Y02E 60/10**

(86) International application number:
**PCT/JP2023/026989**

(87) International publication number:
**WO 2024/024721 (01.02.2024 Gazette 2024/05)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **25.07.2022 JP 2022118209**

(71) Applicant: **ENTEK Asia Inc
Fuwa-gun
Gifu 503-2121 (JP)**

(72) Inventors:
• **SHIDOMI, Takashi
  Fuwa-gun, Gifu 503-2121 (JP)**
• **KATAGIRI, Yuji
  Fuwa-gun, Gifu 503-2121 (JP)**

(74) Representative: **Körfer, Thomas
Mitscherlich PartmbB
Patent- und Rechtsanwälte
Karlstraße 7
80333 München (DE)**

(54) **SEPARATOR FOR LEAD ACID STORAGE BATTERIES, SAID SEPARATOR USING GLASS FIBERS AND THERMALLY FUSIBLE ORGANIC FIBERS**

(57) [Problem] To provide a separator (AGM separator) for a lead acid battery, which has a high strength required for a recent separator for a lead acid battery and has a high electrolyte retention function, and in which peeling of a bag-making processed part (sealed part) does not occur when a cycle life test is performed.

[Solution] A separator for a lead acid battery mainly including a micro-glass fiber and a heat-fusible organic fiber, in which when the separator after bag-making processing using ultrasonic sealing is boiled in water for 60 minutes, a peel strength in a sealed part (fused portion) of the separator is 1 N/20 mm or more.

**Description**

Technical Field

The present invention relates to an improvement in a separator used for a lead acid battery. More specifically, the invention relates to solving a problem, involved in production of a battery, of an AGM (Absorbent Glass Mat) separator formed using a micro-glass fiber and a heat-fusible organic fiber.

Background Art

In a conventional battery for automobiles, a liquid-type lead acid battery is used, but in a recent lead acid battery for automobiles, with the spread of an idling stop and start system (hereinafter referred to as ISS), the use state of the battery has been such that the electric power is not used only for starting the engine as in the past, but also is supplied to an electrical system in stopping the engine besides in starting the engine, and thus charging and discharging cycles are performed more frequently than before.

At the same time, a lead acid battery is not always in a fully charged state, and therefore stirring of the electrolyte does not occur, and a difference in specific gravity of the electrolyte occurs within the lead acid battery (electrolyte stratification phenomenon: hereinafter referred to as stratification), which is a factor that reduces the battery life.

Therefore, in place of a conventional liquid-type lead acid battery, a sealed lead acid battery in which the life performance of the lead acid battery is superior to that of a liquid-type lead acid battery is also used and has become widespread.

Conventionally, a nonwoven fabric made of a micro-glass fiber has been used as a separator for a lead acid battery in order to impart an electrolyte retention function. A separator for a lead acid battery made of such a micro-glass fiber nonwoven fabric is usually folded into a U-shape and used to wrap either a positive or negative electrode plate. Therefore, since both ends of the separator are in an open state, there is a possibility of a short circuit occurring through the open portions of the separator. In addition, the mainstream electrode plate used in a lead acid battery is a cast-type electrode plate (an electrode plate with a cast grid), but recently, an inexpensive expanded electrode plate (an electrode plate with an expanded grid) also began to be used. When an expanded electrode plate is used, there are no frame ribs at both ends, and the electrode plate grid is easily deformed, causing a problem of falling-off of an active material. Therefore, in order to prevent a short circuit through a separator, the separator is subjected to bag-making processing and used.

In a separator for a lead acid battery made of a micro-glass fiber nonwoven fabric, in order to subject the nonwoven fabric to bag-making processing, it is only necessary to join the opposing nonwoven fabric pieces at both side edge parts folded into a U-shape together. However, with a nonwoven fabric made only of a micro-glass fiber that has a small fiber diameter and good electrolyte affinity in order to impart an electrolyte retention function, the nonwoven fabric pieces cannot be joined together. Conventionally, as a general joining method, a method in which the opposing nonwoven fabric pieces are sealed together by heat sealing, ultrasonic sealing, gear sealing, or the like has been proposed.

As a joining method using heat sealing or ultrasonic sealing, for example, as described in PTLs 1 to 4, in place of a glass fiber material (inorganic material) that does not inherently have fusiblility, an organic material (such as a polyethylene fiber) for imparting fusibility is incorporated in an amount of about 20 to 60% by weight in a micro-glass fiber nonwoven fabric.

In addition, as a joining method using gear sealing, for example, as described in PTLs 5 to 8, in place of a glass fiber material that does not inherently have flexibility or elasticity and is brittle, and therefore is susceptible to damage such as folding or cracking due to pressure or impact, an organic material (such as a polyethylene terephthalate fiber) that can withstand a high pressure or impact caused by gear jamming and is for preventing a nonwoven fabric from breaking is incorporated in an amount of about 30 to 50% by weight in a micro-glass fiber nonwoven fabric.

However, in the sealing methods using heat sealing, ultrasonic sealing, gear sealing, or the like of PTLs 1 to 8, about 20 to 60% by weight of an organic material (organic fiber) with low electrolyte affinity and a large fiber diameter is incorporated in a nonwoven fabric made only of a micro-glass fiber with a small fiber diameter and good electrolyte affinity in order to originally impart an electrolyte retention function, and therefore there is a problem in that the electrolyte retention function is impaired as compared with the original nonwoven fabric made only of a micro-glass fiber.

Further, in PTL 9, it is described that, as a sealable separator, 10 to 25% of a heat-fusible core-sheath fiber and 0 to 5% of a monofilament-like heat-fusible fiber are blended, and the total value of an organic material is set to 20 to 30%, and a separator in which bonding by gear sealing is easy and breaking does not occur at the bonded part is described.

However, it is intended to increase the bonding strength of the separator, and the blending proportion of the heat-fusible organic fiber is large, and therefore the electrolyte absorption properties are deteriorated by about 16 to 28% as compared with conventional examples.

On the other hand, in a separator after bag-making processing using ultrasonic sealing, when a cycle life test was performed, peeling sometimes occurred in the bag-making processed part (sealed part) to cause a problem.

The fact that peeling occurs in the bag-making processed part (sealed part) of the separator after bag-making processing using ultrasonic sealing in the separator for a lead acid battery after the cycle life test means that peeling occurs in the bag-making processed part (sealed part) of the separator similarly also in the case of using a lead acid battery for a long period of time, which is a problem that leads to a reduction in the life of the lead acid battery.

It is thought that this is because in the cycle life test, the test is performed in an overcharged state, and therefore the temperature of the electrolyte becomes high, and the bag-making processed part (sealed part) by ultrasonic sealing swells in the electrolyte, and the bonding between the fibers tends to come off to decrease the seal strength (peel strength).

Further, cost competition for lead acid batteries for automobiles is intensifying, and it is essential to improve the takt time for producing batteries. Therefore, a high-strength AGM separator is required, and PTL 10 describes that in a nonwoven fabric made of 4 to 12% of a heat-fusible binder fiber and a glass fiber having an average fiber diameter of 3 $\mu$m or less, the bonding between the fibers of a sheet is enhanced, and a variation in electrolyte permeability is prevented.

The separator shown here has a relatively large thickness such that the thickness at the time of pressurization at 20 kPa is 1.8 mm, and because of its large thickness, even if the blending proportion of the heat-fusible binder fiber as a reinforcing material is 12% or less, the absolute strength of the separator itself is high and the separator has a strength that does not affect the assembling workability of a lead acid battery.

On the other hand, in a lead acid battery used in the ISS in recent years, a high-rate discharge characteristic (High-Rate characteristic) is considered important as one of the performance requirements for a battery for automobile, and a lead acid battery is designed with narrow plate spacing for the purpose of enhancing the high-rate discharge characteristic. Therefore, the thickness of a separator for a lead acid battery is as thin as less than 1.8 mm, and therefore the absolute strength of an AGM separator also decreases.

At the same time, in order to improve the ease of assembly of a lead acid battery, an AGM separator with a high tensile strength (sheet strength) is required.

However, increasing the blending proportion of an organic fiber that has a smaller specific surface area and lower hydrophilicity than a fine glass fiber tends to impede the electrical resistance and liquid retention, which are the basic characteristics of an AGM separator.

Therefore, as a measure to increase the tensile strength (sheet strength) without increasing the blending proportion of the organic fiber as much as possible, a measure to reduce the fineness of a heat-fusible organic fiber (to make a heat-fusible organic fiber thinner) and to increase the number of fibers is conceivable. However, if the fineness of the heat-fusible organic fiber is reduced, when an AGM separator is formed, it is affected by the difference in specific gravity between the organic fiber and the glass fiber, and the two are not mixed uniformly, and a problem arises in that the characteristics of an AGM separator vary widely, and an AGM separator of stable quality cannot be obtained.

Similarly, a recent lead acid battery requires to be pressurized at high pressure to achieve a high capacity and a long-life battery, and perforation is also likely to occur due to a frame bone or the like of an expanded electrode plate, and therefore the AGM separator is required to have a puncture strength of 6 N/mm or more.

Citation List

Patent Literature

PTL 1: JPS57-098975A
PTL 2: JPH06-176749A
PTL 3: JPH09-017406A
PTL 4: JP2003-100276A
PTL 5: JPH02-141955U (Microfilm in Japanese Utility Application No. H02-034644)
PTL 6: JP2004-127578A
PTL 7: JP2005-108617A
PTL 8: JP2003-297328A
PTL 9: JP2009-245901A
PTL 10: JP6518094B

Summary of Invention

Technical Problem

The invention has been made in view of such circumstances, and an object of the invention is to provide a separator (AGM separator) for a lead acid battery, which has a high strength required for a recent separator for a lead acid battery and has a high electrolyte retention function, and in which peeling of a bag-making processed part (sealed part) does not occur when a cycle life test is performed.

Solution to Problem

As a result of intensive studies to solve the above problems, a separator (AGM separator) for a lead acid battery of the invention is a separator for a lead acid battery having the following characteristics.

(1) A separator for a lead acid battery, mainly including a micro-glass fiber and a heat-fusible organic fiber, in which when the separator after bag-making processing is boiled in water for 60 minutes, a peel strength in a sealed part (fused portion) of the separator is 1 N/20 mm or more.
(2) The separator for a lead acid battery according to the above (1), in which the bag-making processing is performed using ultrasonic sealing.
(3) The separator for a lead acid battery according to either one of the above (1) and (2), in which the separator has a thickness of more than 0.50 mm and less than 1.80 mm when pressurized at 20 kPa.
(4) The separator for a lead acid battery according to any one of the above (1) to (3), in which the separator has a puncture strength of 6 N/mm or more.
(5) The separator for a lead acid battery according to any one of the above (1) to (4), in which the separator has a wettability of 100 sec/3 mL or less.
(6) The separator for a lead acid battery according to any one of the above (1) to (5), in which the separator has a tensile strength of 0.2 N/mm$^2$ or more.
(7) The separator for a lead acid battery according to any one of the above (1) to (6), in which the heat-fusible organic fiber is an organic fiber having a core-sheath structure, and a sheath part is a crystalline heat-fusible polyolefin-based resin or a crystalline heat-fusible polyester-based resin.
(8) The separator for a lead acid battery according to any one of the above (1) to (6), in which the heat-fusible organic fiber is an organic fiber having a core-sheath structure, and a sheath part is an amorphous heat-fusible polyester-based resin.
(9) The separator for a lead acid battery according to the above (8), in which in a thermal analysis using a differential scanning calorimeter (DSC) of the separator for a lead acid battery, a glass transition point derived from the organic fiber having a core-sheath structure in which the sheath part is an amorphous heat-fusible polyester-based resin is observed at 40°C to 100°C.
(10) The separator for a lead acid battery according to any one of the above (1) to (9), in which the heat-fusible organic fiber has a fineness of 0.4 dtex or more and 2.5 dtex or less.
(11) The separator for a lead acid battery according to any one of the above (1) to (10), in which a blending amount of the heat-fusible organic fiber is 10% by weight or more.
(12) The separator for a lead acid battery according to any one of the above (1) to (11), in which the micro-glass fiber has a number average fiber diameter of 4.5 μm or less.
(13) The separator for a lead acid battery according to any one of the above (1) to (12), in which a total blending amount of the micro-glass fiber and the heat-fusible organic fiber is 60% by weight or more.
(14) A lead acid battery, including the separator for a lead acid battery according to any one of the above (1) to (13).

Advantageous Effects of Invention

It is possible to provide a separator (AGM separator) for a lead acid battery, which has a high strength required for a recent separator for a lead acid battery and has a high electrolyte retention function, and in which peeling of a bag-making processed part (sealed part) does not occur when a cycle life test is performed.

The bag-making processing of a separator (AGM separator) for a lead acid battery is performed using a method such as heat sealing, ultrasonic sealing, or gear sealing, and in the separator (AGM separator) for a lead acid battery of the invention, peeling of the bag-making processed part (sealed part) does not occur regardless of which method is used to perform the bag-making processing. In the invention, when the bag-making processing is performed using ultrasonic sealing, the effect that peeling of the bag-making processed part (sealed part) does not occur is higher.

Description of Embodiments

The separator (AGM separator) for a lead acid battery of the invention is one wet-formed mainly from a micro-glass fiber and a heat-fusible organic fiber, and may contain an inorganic powder such as silica, or a non-heat-fusible organic fiber or resin such as a cellulose, a carbon fiber, or a polyacrylonitrile fiber, each of which is excellent in acid resistance and oxidation resistance, in addition to the micro-glass fiber and the heat-fusible organic fiber.

By blending a monofilament polyester terephthalate fiber, which does not have heat fusibility, as a third component in addition to the heat-fusible organic fiber, even if bag-making processing is performed using gear sealing, heat sealing, ultrasonic sealing, or the like, a good quality AGM separator without compression breaking (shearing) in the sealed portion is obtained.

By blending a monofilament-like organic fiber that does not have heat fusibility, the compressive breaking strength (shearing force) of a nonwoven fabric can be increased (see, for example, JP4261821B), and a better quality AGM separator can be obtained.

In addition, it is also possible to expect a combined effect to be obtained by various combinations with a material that does not have heat fusibility.

Since the micro-glass fiber used in the separator (AGM separator) for a lead acid battery of the invention is used in an electrolyte (an aqueous sulfuric acid solution having a specific gravity of 1.3), an acid-resistant C glass fiber is preferred, but this is not the case if the micro-glass fiber has acid resistance.

The fiber diameter of the micro-glass fiber varies depending on the heat-fusible organic fiber and other auxiliary materials to be combined, but one of the expected functions of the AGM separator is to prevent stratification, and from that point of view, the number average fiber diameter is preferably 4.5 $\mu$m or less. Further, when it is necessary to further improve the prevention of stratification in use in a lead acid battery for the ISS, it is more preferred that the number average fiber diameter is 3.5 $\mu$m or less.

In the separator (AGM separator) for a lead acid battery of the invention, the blending amount of the micro-glass fiber is preferably 60% by weight or more in order to maintain the absolute strength and electrolyte retention function of the AGM separator.

On the other hand, in order to maintain the tensile strength (sheet strength) and the puncture strength of the AGM separator and the bondability (peel strength) between the AGM separators, it is necessary to include at least 10% by weight of the heat-fusible organic fiber, and the blending amount of the micro-glass fiber is preferably 90% by weight or less.

A synthetic resin component of the heat-fusible organic fiber used in the separator (AGM separator) for a lead acid battery of the invention is a synthetic resin such as a polyolefin-based resin such as a polyethylene resin or a polypropylene resin, a polystyrene resin, a polymethyl methacrylate resin, a polyacrylonitrile resin, a nylon resin, a polyester-based resin, or a polyfluoroethylene resin, and among these, one to serve as the heat-fusible component is a polyolefin-based resin such as a polyethylene resin or a polypropylene resin, or a heat-fusible polyester-based resin.

In the invention, a polyolefin-based resin such as a polyethylene resin or a polypropylene resin, a polyester-based resin, or the like is preferably used from the viewpoint of the effect of improving the tensile strength (sheet strength).

In order to increase the number of heat-fusible organic fibers included in the AGM separator, which is a measure to increase the tensile strength (sheet strength), the heat-fusible organic fiber is preferably a heat-fusible organic fiber with a fineness of 2.5 dtex or less, more preferably a heat-fusible organic fiber with a fineness of 1.6 dtex or less, and still more preferably a heat-fusible organic fiber with a fineness of 1.5 dtex or less.

Here, when two or more types of heat-fusible organic fibers are mixed and used, the value of the number average fineness of the heat-fusible organic fibers included in the AGM separator is preferably 2.5 dtex or less, more preferably 1.6 dtex or less, and still more preferably 1.5 dtex or less.

Further, if the fineness of the heat-fusible organic fiber is less than 0.4 dtex, when the AGM separator is formed, it is affected by the difference in specific gravity between the heat-fusible organic fiber and the micro-glass fiber, and the two are not mixed uniformly, and a problem arises in that the characteristics of the AGM separator vary widely, and an AGM separator of stable quality cannot be obtained. Therefore, the fineness of the heat-fusible organic fiber is preferably 0.4 dtex or more, more preferably 0.5 dtex or more, and still more preferably 0.6 dtex or more.

The heat-fusible organic fiber used in the separator (AGM separator) for a lead acid battery of the invention is preferably one having a core-sheath structure.

In this case, the core part may be a commonly used resin such as a polyolefin-based resin such as a polyethylene resin or a polypropylene resin, or a polyester-based resin, but one having acid resistance is preferred, and a polyester-based resin is preferred.

For the sheath part, a polyolefin-based resin such as a polyethylene resin or a polypropylene resin, a polyester-based resin, or the like is preferably used, and a crystalline polyolefin-based resin or a crystalline or amorphous polyester-based resin is more preferred.

In the invention, it is preferred that two or more types of heat-fusible organic fibers are mixed and used, and it is more preferred that two or more types of heat-fusible organic fibers having a core-sheath structure are mixed and used.

In the invention, at least one type of the mixed two or more types of heat-fusible organic fibers having a core-sheath structure is preferably one in which the sheath part is made of an amorphous heat-fusible organic fiber (for example, amorphous Co-PET) having a glass transition point at 40°C to 100°C because the bondability between the organic fibers during drying in the step of producing an AGM separator is enhanced, resulting in an AGM separator excellent in tensile strength and puncture strength.

In the separator (AGM separator) for a lead acid battery of the invention, the blending amount (total amount) of the heat-fusible organic fiber is preferably 10% by weight or more, more preferably 15% by weight or more, and still more preferably 20% by weight or more in order to maintain the tensile strength (sheet strength) and the puncture strength of the AGM separator, and the bondability (peel strength) between the AGM separators.

When the blending amount is less than 10% by weight, the tensile strength (sheet strength) and the puncture strength of the AGM separator are insufficient.

The blending amount (total amount) of the heat-fusible organic fiber is preferably 40% by weight or less, more preferably 35% by weight or less, and still more preferably 30% by weight or less.

When the blending amount exceeds 40%, the ability of the AGM separator to retain the electrolyte decreases, and sulfuric acid released from the electrode plate during charging cannot be retained, causing stratification of the electrolyte.

In the invention, when a heat-fusible organic fiber having a core-sheath structure in which the sheath part is made of a crystalline polyolefin-based resin and the core part is made of a polyester-based resin (for example, PET/crystalline PE) is used alone as the heat-fusible organic fiber, the blending amount thereof is preferably 15% by weight or more and 40% by weight or less, more preferably 20% by weight or more and 40% by weight or less, and still more preferably 25% by weight or more and 40% by weight or less.

In addition, when two types of heat-fusible organic fibers having a core-sheath structure are used as the heat-fusible organic fiber, the blending amount of a heat-fusible organic fiber having a core-sheath structure in which the sheath part is made of a crystalline polyolefin-based resin and the core part is made of a polyester-based resin (for example, PET/crystalline PE) is 10% by weight or more and 40% by weight or less, and the blending amount of a heat-fusible organic fiber having a core-sheath structure in which the sheath part is made of a crystalline polyester-based resin and the core part is made of a crystalline polyester-based resin (for example, PET/crystalline Co-PET) or a heat-fusible organic fiber having a core-sheath structure in which the sheath part is made of an amorphous polyester-based resin and the core part is made of a crystalline polyester-based resin (for example, PET/amorphous Co-PET) is preferably more than 0% by weight and 30% by weight or less, more preferably 5% by weight or more and 30% by weight or less, and still more preferably 10% by weight or more and 30% by weight or less.

In the separator (AGM separator) for a lead acid battery of the invention, the total blending amount of the micro-glass fiber and the heat-fusible organic fiber is preferably 60% by weight or more, more preferably 65% by weight or more, and still more preferably 70% by weight or more.

In the separator (AGM separator) for a lead acid battery of the invention, the thickness of the AGM separator is preferably more than 0.50 mm, and more preferably 0.60 mm or more.

When the thickness of the AGM separator is 0.50 mm or less, the total amount of the electrolyte that can be retained by the AGM separator decreases, and therefore the function to prevent stratification of the electrolyte decreases. In addition, the absolute strength of the AGM separator decreases.

On the other hand, the thickness of the AGM separator is preferably less than 1.80 mm, more preferably 1.70 mm or less, and still more preferably 1.65 mm or less.

When the thickness of the AGM separator is 1.80 mm or more, the spacing between the electrode plates of the lead acid battery becomes wide, resulting in poor battery characteristics.

In the separator (AGM separator) for a lead acid battery of the invention, as for the tensile strength (sheet strength) of the AGM separator, in order to improve the ease of assembly of a lead acid battery, the AGM separator preferably has a mechanical strength of 0.2 N/mm$^2$ or more, and more preferably 0.7 N/mm$^2$ or more.

When the tensile strength (sheet strength) is less than 0.2 N/mm$^2$, the performance of assembling a lead acid battery and the basic physical properties during charging and discharging reactions decrease, and the battery life decreases.

In the separator (AGM separator) for a lead acid battery of the invention, as for the puncture strength of the AGM separator, in order to improve the ease of assembly of a lead acid battery, the AGM separator preferably has a mechanical strength of 6 N/mm or more, more preferably 8 N/mm or more, and still more preferably 10 N/mm or more.

When the puncture strength is less than 6 N/mm, the performance of assembling a lead acid battery and the basic physical properties during charging and discharging reactions decrease, and the battery life decreases.

In the separator (AGM separator) for a lead acid battery of the invention, it is necessary to prevent peeling from occurring in the bag-making processed part (sealed part) formed by bag-making processing using ultrasonic sealing after a cycle life test. Therefore, the peel strength in the sealed part (fused portion) of the separator is preferably 1 N/20 mm or more, and more preferably 2 N/20 mm or more when the separator after bag-making processing using ultrasonic sealing is boiled in water for 60 minutes.

In the sealed part (fused portion) of the separator when boiled in water for 60 minutes, peeling did not occur in the bag-making processed part (sealed part) formed using ultrasonic sealing after a cycle life test in the separator having a peel strength of 1 N/20 mm or more.

The cycle life test is a test conducted in an overcharged state, and is considered to be under conditions equivalent to boiling for 60 minutes. In addition, as the electrolyte used in a lead acid battery, an aqueous sulfuric acid solution is usually used, but there are safety issues with conducting a boiling test using an aqueous sulfuric acid solution, and it was found that boiling in water can be used as an alternative.

In the separator (AGM separator) for a lead acid battery of the invention, the liquid absorption height of the AGM separator is preferably 20 mm/min or more, and more preferably 25 mm/min or more in order to retain the electrolyte and maintain the capacity.

When the liquid absorption height is less than 20 mm/min, the electrolyte retention within a lead acid battery decreases, and the capacity decreases.

In the separator (AGM separator) for a lead acid battery of the invention, the wettability of the AGM separator is preferably 100 sec/3 mL or less, and more preferably 60 sec/3 mL or less in order to improve the electrolyte injection rate.

When the wettability exceeds 100 sec/3 mL, the production rate of lead acid batteries decreases.

In the separator (AGM separator) for a lead acid battery of the invention, the degree of water absorption of the AGM separator is preferably 4 g/g or more, and more preferably 5 g/g or more in order to maintain the capacity of a lead acid battery.

When the degree of water absorption is less than 4 g/g, the capacity of a lead acid battery decreases.

In the separator (AGM separator) for a lead acid battery of the invention, the maximum pore diameter of the AGM separator is preferably less than 100 $\mu$m, and more preferably 40 $\mu$m or less from the viewpoint of preventing stratification of the electrolyte.

In the separator (AGM separator) for a lead acid battery of the invention, the elongation rate of the AGM separator is preferably in the range of 2.0% or more and less than 20.0%, and more preferably in the range of 2.5% or more and 15.0% or less.

In the charging and discharging reactions during use of a battery, absorption and release of the electrolyte are repeated, and therefore accompanied by expansion and contraction of the AGM separator.

Further, the AGM separator is mainly shipped in the form of a roll at the time of shipment, and when a lead acid battery is assembled, the AGM separator is pulled out from the roll and used. Therefore, when the elongation rate of the AGM separator measured under room temperature conditions is 20.0% or more, the AGM separator is elongated due to the force when the AGM separator is pulled out, and the dimensions of the AGM separator in the width direction and the thickness direction change.

In such a case, changes in the spacing between the electrode plates and the dimensions thereof, which are set for preventing a short circuit on the side surfaces of the electrodes of a lead acid battery, cause an early battery short circuit.

Further, when the AGM separator is pulled out from the roll and used at the time of assembling a lead acid battery, if the elongation rate is less than 2.0%, cracking occurs in the AGM separator, resulting in a defective product, which cannot be shipped.

Among the heat-fusible organic fibers having a core-sheath structure preferably used in the separator (AGM separator) for a lead acid battery of the invention, those which can undergo ultrasonic sealing include PET/PET and PET/PE.

PET/Co-PET, in which copolymerized PET (Co-PET) having a low glass transition point (about 70°C) is used in the sheath part, has high bondability between organic fibers during drying in the step of producing an AGM separator, resulting in an AGM separator excellent in tensile strength and puncture strength. Further, since PET has an ester bond, and therefore the resulting AGM separator has also good wettability to the electrolyte.

However, if only a PET/PET fiber is used, the AGM separator has good wettability when exposed to the electrolyte for a long period of time in a lead acid battery, and therefore the sealed part of the AGM separator after bag-making processing swells, and a disadvantage arises in that the bonding between the fibers tends to come off to decrease the peel strength (seal strength).

On the other hand, in a PET/PE fiber, PE is used in the sheath part, and PE does not have an ester bond, and therefore an AGM separator has low wettability, and there is an advantage in that the peel strength (seal strength) of the AGM separator does not easily decrease even if exposed to the electrolyte for a long period of time in a lead acid battery.

In addition, there is an AGM separator formed using a PE pulp-like heat-fusible fiber as one that can undergo ultrasonic sealing, and the peel strength (seal strength) of the AGM separator does not easily decrease, but there is a disadvantage in that the tensile strength and the puncture strength are low. It is assumed that this is because the PE pulp-like heat-fusible fiber melts unevenly on the surface of the AGM separator during production of the AGM separator, resulting in low tensile strength and low puncture strength.

Therefore, in the invention, when a single type of heat-fusible organic fiber having a core-sheath structure is used, a heat-fusible organic fiber having a core-sheath structure in which the sheath part is made of a crystalline polyolefin-based resin and the core part is made of a polyester-based resin (for example, PET/crystalline PE) is a preferred heat-fusible organic fiber having a core-sheath structure, and the blending amount thereof is preferably 15% by weight or more and 40% by weight or less.

Then, in order to obtain an excellent puncture strength, a heat-fusible organic fiber having a core-sheath structure in which the sheath part is made of an amorphous polyester-based resin and the core part is made of a crystalline polyester-based resin (for example, PET/amorphous Co-PET) can also be used as the single type of heat-fusible organic fiber having a core-sheath structure, and the blending amount thereof is preferably 20% by weight or more and 40% by weight or less.

When two types of heat-fusible organic fibers having a core-sheath structure are used, a preferred combination of heat-fusible organic fibers having a core-sheath structure includes a heat-fusible organic fiber having a core-sheath structure in which the sheath part is made of a crystalline polyolefin-based resin and the core part is made of a polyester-based resin (for example, PET/crystalline PE), and includes a heat-fusible organic fiber having a core-sheath structure in which the sheath part is made of a crystalline polyester-based resin and the core part is made of a crystalline polyester-based resin (for example, PET/crystalline Co-PET) or a heat-fusible organic fiber having a core-sheath structure in which the sheath part is made of an amorphous polyester-based resin and the core part is made of a crystalline polyester-based resin (for example, PET/amorphous Co-PET). Then, the blending amount of the heat-fusible organic fiber having a core-sheath structure in which the sheath part is made of a crystalline polyolefin-based resin and the core part is made of a polyester-based resin (for example, PET/crystalline PE) is preferably 10% by weight or more and 40% by weight or less, and the blending amount of the heat-fusible organic fiber having a core-sheath structure in which the sheath part is made of a crystalline polyester-based resin and the core part is made of a crystalline polyester-based resin (for example, PET/crystalline Co-PET) or the heat-fusible organic fiber having a core-sheath structure in which the sheath part is made of an amorphous polyester-based resin and the core part is made of a crystalline polyester-based resin (for example, PET/amorphous Co-PET) is preferably more than 0% by weight and 30% by weight or less.

In the case of using two types of heat-fusible organic fibers having a core-sheath structure in the invention, when a heat-fusible organic fiber having a core-sheath structure in which the sheath part is made of an amorphous heat-fusible organic fiber having a glass transition point at 40°C to 100°C (for example, amorphous Co-PET) is mixed and used, in the produced separator (AGM separator) for a lead acid battery, a glass transition point derived from the amorphous heat-fusible organic fiber used can be observed at 40°C to 100°C by a thermal analysis using a differential scanning calorimeter (DSC). In addition, when a heat-fusible organic fiber having a core-sheath structure in which the sheath part is made of a crystalline polyolefin-based resin (for example, crystalline PE) is mixed and used, a melting point derived from the heat-fusible organic fiber used can be observed at 100°C or higher and lower than 200°C by a thermal analysis using a differential scanning calorimeter (DSC), and when a heat-fusible organic fiber having a core-sheath structure in which the sheath part is made of a crystalline polyester-based resin (for example, crystalline Co-PET) is mixed and used, a melting point derived from the heat-fusible organic fiber used can be observed at 100°C or higher and lower than 200°C by a thermal analysis using a differential scanning calorimeter (DSC). Similarly, when a heat-fusible organic fiber having a core-sheath structure made of a heat-fusible organic fiber having a core-sheath structure in which the core part is made of a crystalline polyester-based resin (for example, PET) is mixed and used, a melting point derived from the heat-fusible organic fiber used can be observed at 200°C or higher and lower than 300°C by a thermal analysis using a differential scanning calorimeter (DSC).

Examples

The invention will be described more specifically below with reference to Examples, Conventional Examples, and Comparative Examples, but the invention is not limited to the following Examples unless the invention exceeds the gist thereof.

Separators (AGM separators) for a lead acid battery of Examples 1 to 11, Conventional Examples 1 and 2, and Comparative Examples 1 to 15 were prepared using the following raw materials.

[Blended Raw Materials]

(1) Micro-glass fiber

    A: CMLF-307R, manufactured by Nippon Sheet Glass Co., Ltd., number average fiber diameter: 0.7 $\mu$m
    B: CMLF-114R, manufactured by Nippon Sheet Glass Co., Ltd., number average fiber diameter: 4 $\mu$m

(2) Heat-fusible organic fiber

    A: TEPYRUS TJ04EN, manufactured by TEIJIN LIMITED, two-component core-sheath type (core: polyethylene terephthalate, sheath: crystalline polyethylene), fineness: 1.2 dtex

B: MELTY 4080, manufactured by UNITIKA LTD., two-component core-sheath type (core: polyethylene terephthalate, sheath: amorphous copolymerized polyethylene terephthalate), fineness: 1.7 dtex

C: TEPYRUS TJ04CN, manufactured by TEIJIN LIMITED, two-component core-sheath type (core: polyethylene terephthalate, sheath: amorphous copolymerized polyethylene terephthalate), fineness: 1.1 dtex

D: SIMTEX SCE, manufactured by UBE EXSYMO CO., LTD., two-component core-sheath type (core: polypropylene, sheath: crystalline polyethylene), fineness: 1.7 dtex

E: CASVEN 7080, manufactured by UNITIKA LTD., two-component core/sheath type (core: polyethylene terephthalate, sheath: crystalline copolymerized polyethylene terephthalate), fineness: 1.1 dtex

F: MELTY 4000, manufactured by UNITIKA LTD., one-component all-fusion type (amorphous copolymerized polyethylene terephthalate), fineness: 2.2 dtex

G: SWP EST-2 (synthetic polyethylene pulp) manufactured by Mitsui Chemicals, Inc., fiber diameter: 2 to 30 $\mu$m

(3) Non-bondable monofilament-like organic fiber

EP133 (polyethylene terephthalate) manufactured by KURARAY CO., LTD., fineness 1.45 dtex

(4) Inorganic filler

Silica: BG-3, manufactured by Evonik Industries AG

Diatomaceous earth: Radiolite F, manufactured by Showa Chemical Industry Co., Ltd.

[Production of AGM Separator]

Separators (AGM separators) for a lead acid battery of Examples 1 to 11, Conventional Examples 1 and 2, and Comparative Examples 1 to 15 were produced by the following procedure according to the formulation shown in Tables 1 and 2.

About 7 to 13 g of the raw materials were put in a container of an industrial mixer (MX-152SP, manufactured by Panasonic Corporation), and about 1,000 mL of water was added thereto to macerate the raw materials for 60 seconds (rotational speed: about 9,700 rpm). A slurry-like sample liquid was put in a square sheet machine for experiments, and water was further added thereto, and the mixture was stirred uniformly so that the concentration was 0.25% by weight, and then formed into a sheet. An AGM separator was produced by heating and drying at 100°C for 30 minutes and then at 180°C for 3 minutes using a box dryer. When the sheet was dried, attention was paid so that water vapor did not stay in the dryer.

[Methods for Test and Evaluation]

For the above Examples, Conventional Examples, and Comparative Examples, evaluation was performed under the following conditions, and the results are collectively shown in Tables 1 and 2.

(1) Thickness (mm)

The produced AGM separator was cut to a size of 100 mm $\times$ 100 mm to form a test piece. Ten such test pieces were stacked, and measurement was performed according to the method described in Standard of Battery Association of Japan SBA S 0406-2017 7.2.2.b) for AGM separator for lead acid battery.

In the measurement, a load of 196 N was gently applied uniformly to the entire surface of the stacked 10 test pieces, and the thickness of the four corners of the AGM separator was measured, and the thickness was expressed as the average value.

(2) Density (g/cm$^3$)

Measurement was performed according to the method described in Standard of Battery Association of Japan SBA S 0406-2017 7.2.3 for AGM separator for lead acid battery, and the density was calculated according to the following formula.

Apparent density (g/cm$^3$) = [weight (g/m$^2$)]/[thickness (mm)]/1000

(3) Tensile strength (N/mm$^2$)

Measurement was performed by the following procedure according to the method described in Standard of Battery Association of Japan SBA S 0406-2017 7.2.7 for AGM separator for lead acid battery.

The produced AGM separator was cut to a size of 10 mm × 70 mm to form a test piece. The test piece was pulled at a rate of 200 mm per minute using a Schopper type or a similar tensile tester at 294 N or less with a chuck (grip) distance of 50 mm, and the maximum value until the test piece broke was measured.

(4) Puncture strength (N/mm)

The produced AGM separator cut to a size of 20 mm × 150 mm was fastened with a fixing jig with a hole of 5 mm in diameter, and an iron rod with a hemispherical tip with a diameter of 2 mm (r = 1 mm) pierced from the top at a rate of 50 mm/min. The maximum load (N) until the test piece was punctured was measured, and the puncture strength was calculated by dividing the maximum load by the thickness (mm) of the AGM separator.

(5) Whether bag-making processing using ultrasonic sealing is possible

The AGM separator produced was cut to a size of 110 mm × 260 mm and folded in half along the longitudinal direction, and both ends were set in an ultrasonic welder under the conditions of a welding energy of 300 J, a holding time of 1 s, and a seal line width of 2 mm using an ultrasonic welder SONOPET JII, manufactured by SEIDENSHA ELECTRONICS CO., LTD. A case where sealing could be done with the ultrasonic welder was marked as "O", and a case where sealing could not be done was marked as "X".

(6) Peel strength (after ultrasonic sealing (before boiling treatment), N/20 mm)

The AGM separator produced was subjected to ultrasonic sealing by the method described in the above (5), and then cut to a width of 20 mm such that the sealed part is included. The sealed portion was pulled at 50 mm/mim using a tensile tester, and the maximum load (N) until peeling occurred was measured, which was taken as the peel strength after ultrasonic sealing (before boiling treatment).

A case where ultrasonic sealing could not be done by the method described in the above (5) was marked as "X".

(7) Peel strength (after ultrasonic sealing (after boiling treatment), N/20 mm)

Ultrasonic sealing was performed in the same manner as in the above (6), and a sample cut to a width of 20 mm was placed in a beaker containing 500 mL of water, heated with a mantle heater, and boiled for 60 minutes. The sample after boiling was taken out from the beaker and allowed to cool to room temperature, and then, the maximum load (N) until peeling occurred under the same conditions as in the above (6) was measured, which was taken as the peel strength after the boiling treatment.

A case where ultrasonic sealing could not be done by the method described in the above (5) or a case where the sealed part was peeled off before being attached to the tensile tester was marked as "X".

(8) Maximum pore diameter (μm)

The test piece was impregnated with an ethanol solution, and the ethanol solution was further injected onto the test piece at a height of 10 mm, and pressurized air was allowed to flow from below (AGM separator surface). The ventilation pressure was gradually increased, and the pressure value when a bubble (air bubble) first appeared through the test piece was read from a manometer (mm), and the maximum pore diameter was calculated using the following calculation formula.

At this time, the temperature of the ethanol solution was measured, and the surface tension at that temperature was incorporated into the calculation formula.

Maximum pore diameter (μm) = [4 × (surface tension of liquid) × 104]/[980 × {(manometer reading, mm) - (height of liquid above sample, 10 mm)}]

(9) Liquid absorption height (mm/min)

The AGM separator produced was cut to a size of 15 mm in width and 10 cm or more in height to form a sample. The sample was hung vertically, and its lower end (1 cm) was immersed in an aqueous sulfuric acid solution having a specific gravity of 1.30. The height (mm) of the aqueous sulfuric acid solution sucked up in 1 minute was measured, which was taken as the liquid absorption height.

(10) Wettability (sec/3 mL)

The AGM separator produced was cut to a size of 100 mm × 100 mm to form a sample. When 3 mL of a colored aqueous sulfuric acid solution (red) having a specific gravity of 1.30 placed in a buret was dropped onto the sample at a rate of 2.2 mL/sec, the time until the solution completely soaked therein was measured, which was taken as the wettability.

(11) Degree of water absorption (g/g)

The AGM separator produced was cut to a size of 100 mm × 100 mm to form a sample. After the weight (W1, g) of the sample was measured, the sample was immersed in a vat filled with water for 1 minute. The sample after immersion was taken out, placed on a table with an inclination of 45°, and left to stand for 30 seconds, and then the weight (W2, g) of the sample in a water-containing state was measured. The degree of water absorption was calculated according to the following formula.

$$\text{Degree of water absorption (g/g)} = (W2 - W1)/W1$$

(12) Thermal analysis using differential scanning calorimeter (DSC)

The AGM separator produced was subjected to differential scanning calorimetry (measurement temperature range: 40°C to 350°C, heating rate: 10°C/min) in a nitrogen atmosphere (flow rate: 100 mL/min) using a differential scanning calorimeter (DSC) (DSC60, manufactured by Shimadzu Corporation).
The glass transition point (°C) and the melting point (°C) were determined from the obtained DSC curve.

(13) Perforation during assembly of lead acid battery

A 55D23L standard lead acid battery was produced according to JIS D5301:2019 using the AGM separator produced.
The test was performed by disassembling the produced lead acid battery before injecting the electrolyte and checking whether perforation occurred in the AGM separator by visual inspection.
A case where perforation did not occur was evaluated as "without perforation (O)", and a case where perforation occurred at even one place was evaluated as "with perforation (X)".
The AGM separators of Comparative Examples 14 and 15 do not include a micro-glass fiber and therefore do not have an electrolyte retention function. Therefore, the test performed after assembling a lead acid battery was omitted.

(14) Whether peeling occurred after cycle life test

A lead acid battery was produced using the AGM separator produced. A cycle life test (200 cycles) was performed according to JIS C8702-1:2009 "Small-sized valve regulated lead acid batteries - Part 1: General requirements, functional characteristics - Methods of test". The test was performed by disassembling the lead acid battery after the test and checking whether peeling occurred in the bag-making processed part (sealed part) of the AGM separator by visual inspection.
A case where peeling did not occur was evaluated as "without peeling (0)", and a case where even a little peeling occurred was evaluated as "with peeling (X)".
The AGM separators of Comparative Examples 14 and 15 do not include a micro-glass fiber and therefore do not have an electrolyte retention function. Therefore, the test performed after assembling a lead acid battery was omitted.
The evaluation results of Examples 1 to 11, Conventional Examples 1 and 2, and Comparative Examples 1 to 15 are collectively shown in Tables 1 and 2.

[Table 1]

| Item | | Fineness/fiber diameter | Unit | Example1 | Example2 | Example3 | Example4 | Example5 | Example6 | Example7 | Example8 | Example9 | Example10 | Example11 |
|---|---|---|---|---|---|---|---|---|---|---|---|---|---|---|
| Glass fiber | CMLF-307R | 0.7μm | | 80 | 75 | 70 | 60 | 60 | 70 | 70 | 70 | 60 | 60 | 60 |
| Glass fiber | CMLF-114R | 4μm | | | | | | | | | | | | |
| PET/Crystalline PE | TJ04EN | 1.2dtex | Wt% | 20 | 25 | 30 | 40 | | 10 | 15 | 20 | 10 | 20 | 30 |
| PET/Amorphous CoPET | MELTY 4080 | 1.7dtex | | | | | | 40 | 20 | 15 | 10 | 30 | 20 | 10 |
| PET/Amorphous CoPET | TJ04CN | 1.1dtex | | | | | | | | | | | | |
| PPICrystalline PE | SCE | 1.7dtex | | | | | | | | | | | | |
| PETICrystalline CoPET | CASVEN 7080 | 1.1dtex | | | | | | | | | | | | |
| Amorphous Co-PET | MELTY 4000 | 2.2dtex | | | | | | | | | | | | |
| PET | EP133 | 1.45dtex | | | | | | | | | | | | |
| Synthetic PE pulp | SWP EST-2 | 2~30μm | | | | | | | | | | | | |
| Silica | BG-3 | - | | | | | | | | | | | | |
| Diatomaceous earth | Radiolite F | - | | | | | | | | | | | | |
| Thickness | | | mm | 1.29 | 1.29 | 1.33 | 1.36 | 1.26 | 1.31 | 1.31 | 1.22 | 1.34 | 1.30 | 1.27 |
| Density | | | g/cm³ | 0.160 | 0.159 | 0.161 | 0.154 | 0.169 | 0.173 | 0.163 | 0.161 | 0.155 | 0.161 | 0.166 |
| Tensile strength | | | N/mm² | 0.31 | 0.42 | 0.74 | 1.01 | 1.93 | 0.93 | 0.96 | 1.16 | 1.32 | 1.33 | 1.30 |
| Puncture strength | | | N/mm | 8.8 | 11.7 | 14.0 | 14.9 | 19.6 | 15.1 | 16.8 | 17.4 | 17.6 | 18.0 | 17.5 |
| Whether bag-making processing using ultrasonic sealing is possible | | | Visual inspection | ○ | ○ | ○ | ○ | ○ | ○ | ○ | ○ | ○ | ○ | ○ |
| Peel strength (before boiling treatment) | | | N/20mm | 2.4 | 4.0 | 4.6 | 6.9 | 7.1 | 5.4 | 5.1 | 4.7 | 5.1 | 5.8 | 6.2 |
| Peel strength (after boiling treatment) | | | N/20mm | 1.5 | 2.5 | 3.0 | 6.1 | 1.4 | 2.0 | 2.2 | 2.2 | 2.3 | 4.0 | 3.6 |
| Maximum pore diameter | | | μm | 17.6 | 19.4 | 19.4 | 236 | 22.7 | 15.1 | 16.0 | 15.7 | 27.3 | 25.9 | 25.8 |
| Liquid absorption height | | | mm/min | 27 | 27 | 25 | 23 | 29 | 29 | 30 | 25 | 29 | 27 | 25 |
| Wettability | | | sec/3ml | 23 | 29 | 27 | 37 | 11 | 17 | 17 | 24 | 15 | 19 | 27 |

(continued)

| Item | Fineness/fiber diameter | Unit | Example1 | Example2 | Example3 | Example4 | Example5 | Example6 | Example7 | Example8 | Example9 | Example10 | Example11 |
|---|---|---|---|---|---|---|---|---|---|---|---|---|---|
| Degree of water absorption | | g/g | 7.7 | 7.1 | 6.4 | 6.6 | 6.5 | 6.6 | 6.3 | 6.4 | 6.8 | 6.5 | 6.9 |
| Thermal analysis using differential scanning calorimeter (DSC) | | °C | 128.0/ 252.2 | 128.6/ 254.9 | 128.1/ 254.4 | 128.2/ 254.6 | 68.2/ 256.2 | 68.41 128.41 256.4 | 68.4/ 129.2/ 256.6 | 67.91 128.51 255.4 | 68.6/ 129.1/ 256.5 | 69.5/ 129.71 256.7 | 69.1/ 129.71 256.1 |
| Perforation during assembly | | Visual inspection | ○ | ○ | ○ | ○ | ○ | ○ | ○ | ○ | ○ | ○ | ○ |
| Whether peeling occurred (after cycle life test) | | Visual inspection | ○ | ○ | ○ | ○ | ○ | ○ | ○ | ○ | ○ | ○ | ○ |

[Table 2]

| Item | Fineness/fiber diameter | Unit | Conventional Example1 | Conventional Example2 | Comparative Example1 | Comparative Example2 | Comparative Example3 | Comparative Example4 | Comparative Example5 | Comparative Example6 | Comparative Example7 | Comparative Example8 | Comparative Example9 | Comparative Example10 | Comparative Example11 | Comparative Example12 | Comparative Example13 | Comparative Example14 | Comparative Example15 |
|---|---|---|---|---|---|---|---|---|---|---|---|---|---|---|---|---|---|---|---|
| Glass fiber CMLF-307R | 0.7μm | Wt% | 73 | 23 | 95 | 90 | 95 | 90 | 80 | 70 | 70 | 70 | 70 | 70 | 70 | 70 | 100 | | |
| Glass fiber CMLF-114R | 4μm | | | 12 | | | | | | | | | | | | | | | |
| PET/Crystalline PE TJ04EN | 1.2dtex | | | | 5 | 10 | | | | | | | | | | | | 100 | |
| PET/Amorphous CoPET MELTY4080 | 1.7dtex | | | | | | 5 | 10 | 20 | 30 | | | | | 2.5 | 5 | | | 100 |
| PET/Amorphous CoPET TJ04CN | 1.1dtex | | | | | | | | | | 30 | | | | | | | | |
| PP/Crystalline CoPET SOE | 1.7dtex | | | | | | | | | | | 30 | | | | | | | |
| PET/Crystalline CoPET CASVEN 7090 | 1.1dtex | | | | | | | | | | | | 30 | | | | | | |
| Amorphous CoPET MELTY4080 | 2.2dtex | | | | | | | | | | | | | 30 | | | | | |
| PET EP133 | 1.45dtex | | | 19 | | | | | | | | | | | | | | | |
| Synthetic PE pulp SWPEST-2 | 2~30μm | | 9 | 15 | | | | | | | | | | | 27.5 | 25 | | | |
| Silica BG-3 | - | | 18 | 21 | | | | | | | | | | | | | | | |
| Diatomaceous earth Radiolite F | - | | | 10 | | | | | | | | | | | | | | | |
| Thickness | | mm | 1.30 | 1.10 | 1.37 | 1.38 | 1.36 | 1.40 | 1.35 | 1.25 | 1.40 | 1.30 | 1.30 | 1.14 | 1.27 | 1.26 | 1.39 | 1.33 | 1.62 |
| Density | | g/cm³ | 0.180 | 0.260 | 0.151 | 0.161 | 0.153 | 0.148 | 0.165 | 0.170 | 0.150 | 0.149 | 0.162 | 0.184 | 0.164 | 0.166 | 0.162 | 0.175 | 0.183 |
| Tensile strength | | N/mm² | 0.63 | 0.69 | 0.31 | 0.44 | 0.28 | 0.43 | 0.74 | 1.39 | 1.03 | 0.34 | 1.10 | 0.39 | 1.16 | 1.22 | 0.20 | 2.88 | 5.41 |
| Puncture strength | | N/mm | 5.2 | 5.8 | 4.3 | 5.6 | 3.9 | 5.6 | 8.9 | 17.8 | 13.6 | 2.8 | 13.2 | 2.2 | 16.5 | 16.3 | 2.2 | 27.3 | 36.2 |
| Whether bag-making processing using ultrasonic sealing is possible | | Visual inspection | ○ | ○ | ○ | ○ | ○ | ○ | ○ | ○ | ○ | ○ | ○ | × | ○ | ○ | × | ○ | ○ |
| Peel strength (before boiling treatment) | | N/20mm | 3.4 | 3.6 | 0.3 | 0.6 | 0.1 | 0.9 | 1.4 | 3.5 | 2.7 | 1.4 | 3.9 | × | 3.2 | 3.8 | × | 42.0 | 48.4 |
| Peel strength (after boiling treatment) | | N/20mm | 2.5 | 1.7 | × | 0.5 | × | × | 0.7 | 0.8 | 0.5 | 1.2 | 0.9 | × | 0.8 | 0.9 | × | 47.1 | 103.2 |
| Maximum pore diameter | | μm | 14.6 | 20.6 | 17.5 | 20.1 | 22.2 | 21.0 | 21.6 | 15.3 | 17.7 | 29.2 | 14.6 | 15.6 | 24.4 | 20.0 | 16.3 | 100 or more | 100 or more |
| Liquid absorption height | | mm/min | 16 | 25 | 28 | 28 | 29 | 29 | 29 | 29 | 28 | 28 | 24 | 29 | 28 | 28 | 30 | 0 | 10 |
| Wettability | | sec/3 mL | 14.5 | 42.8 | 10.8 | 12.4 | 9.0 | 7.7 | 8.3 | 10.5 | 7.9 | 14.7 | 11.3 | 16.1 | 9.1 | 10.1 | 7.8 | 120 or more | 5.5 |
| Degree of water absorption | | g/g | 6.8 | 4.4 | 7.4 | 7.1 | 7.5 | 7.1 | 7.1 | 6.7 | 6.7 | 8.7 | 6.3 | 5.5 | 6.6 | 7.4 | 8.5 | 1.7 | 7.9 |
| Thermal analysis using differential scanning calorimeter (DSC) | | °C | 132.8/ 266.4 | 132.1/ 266.4 | 128.0/ 252.2 | 127.9/ 255.7 | 128.1/ 257.5 | 128.8/ 256.4 | 128.7/ 257.2 | 128.2/ 256.1 | 128.3/ 254.8 | 128.5/ 163.9/ 176.7 | 162.4/ 256.8 | 68.6 | 68.3/ 127.5/ 255.7 | 69.4/ 128.2/ 262.6 | — | 129.7/ 254.1 | 67.7/ 252.0 |
| Perforation during assembly | | Visual inspection | × | × | × | × | × | × | ○ | ○ | ○ | × | ○ | × | ○ | ○ | × | — | — |
| Whether peeling occurred (after cycle life test) | | Visual inspection | ○ | ○ | × | × | × | × | × | × | × | ○ | × | × | × | × | × | — | — |

From the test results of Examples 1 to 11, Conventional Examples 1 and 2, and Comparative Examples 1 to 15 shown in Tables 1 and 2, it was found that peeling of the bag-making processed part (sealed part) does not occur when a cycle life test is performed in a separator (AGM separator) for a lead acid battery in which the peel strength in the sealed part (fused portion) of the separator (AGM separator) for a lead acid battery is 1 N/20 mm or more when the AGM separator after bag-making processing using ultrasonic sealing is boiled in water for 60 minutes. It was also found that a problem that perforation occurs in a separator (AGM separator) for a lead acid battery when a lead acid battery is assembled does not occur in a separator (AGM separator) for a lead acid battery in which the puncture strength of the separator (AGM separator) for a lead acid battery is 6 N/mm or more. Then, in the separators (AGM separators) for a lead acid battery of Examples 5 to 11, a glass transition point derived from the used heat-fusible organic fiber having a core-sheath structure in which the sheath part is made of an amorphous heat-fusible organic fiber (amorphous Co-PET) could be observed at about 70°C by a thermal analysis using a differential scanning calorimeter (DSC). The separators (AGM separators) for a lead acid battery of Examples 5 to 11 formed using a heat-fusible organic fiber having a core-sheath structure in which the sheath part is made of amorphous Co-PET having a glass transition point of about 70°C had a puncture strength of 15.1 N/mm or more.

Meanwhile, in Conventional Examples 1 and 2, which do not include an organic fiber having a core-sheath structure as a heat-fusible organic fiber, the peel strength in the sealed part (fused portion) of the separator (AGM separator) for a lead acid battery was 1 N/20 mm or more when the separator (AGM separator) for a lead acid battery after bag-making processing using ultrasonic sealing was boiled in water for 60 minutes. However, the puncture strength was less than 6 N/mm, and therefore a problem that perforation occurs in the separator (AGM separator) for a lead acid battery when a lead acid battery is assembled occurred, and it was found that the separator (AGM separator) for a lead acid battery has a problem in strength.

From the test results of Examples 1 to 11, Conventional Examples 1 and 2, and Comparative Examples 1 to 15, it could be verified that the separator (AGM separator) for a lead acid battery of the invention has a high strength required for a recent separator for a lead acid battery and has a high electrolyte retention function, and that a separator (AGM separator) for a lead acid battery, in which peeling of a bag-making processed part (sealed part) does not occur when a cycle life test is performed, can be provided.

Industrial Applicability

The separator (AGM separator) for a lead acid battery of the invention has a high strength required for a recent separator for a lead acid battery and has a high electrolyte retention function, and peeling of a bag-making processed part (sealed part) does not occur when a cycle life test is performed, and therefore the takt time for producing lead acid batteries can be improved.

**Claims**

1. A separator for a lead acid battery, mainly comprising a micro-glass fiber and a heat-fusible organic fiber, wherein when the separator after bag-making processing is boiled in water for 60 minutes, a peel strength in a sealed part (fused portion) of the separator is 1 N/20 mm or more.

2. The separator for a lead acid battery according to claim 1, wherein the bag-making processing is performed using ultrasonic sealing.

3. The separator for a lead acid battery according to claim 1, wherein the separator has a thickness of more than 0.50 mm and less than 1.80 mm when pressurized at 20 kPa.

4. The separator for a lead acid battery according to claim 1, wherein the separator has a puncture strength of 6 N/mm or more.

5. The separator for a lead acid battery according to claim 1, wherein the separator has a wettability of 100 sec/3 mL or less.

6. The separator for a lead acid battery according to claim 1, wherein the separator has a tensile strength of $0.2\ N/mm^2$ or more.

7. The separator for a lead acid battery according to claim 1, wherein the heat-fusible organic fiber is an organic fiber having a core-sheath structure, and a sheath part is a crystalline heat-fusible polyolefin-based resin or a crystalline heat-fusible polyester-based resin.

8. The separator for a lead acid battery according to claim 1, wherein the heat-fusible organic fiber is an organic fiber having a core-sheath structure, and a sheath part is an amorphous heat-fusible polyester-based resin.

9. The separator for a lead acid battery according to claim 8, wherein in a thermal analysis using a differential scanning calorimeter (DSC) of the separator for a lead acid battery, a glass transition point derived from the organic fiber having a core-sheath structure in which the sheath part is an amorphous heat-fusible polyester-based resin is observed at 40°C to 100°C.

10. The separator for a lead acid battery according to claim 1, wherein the heat-fusible organic fiber has a fineness of 0.4 dtex or more and 2.5 dtex or less.

11. The separator for a lead acid battery according to claim 1, wherein a blending amount of the heat-fusible organic fiber is 10% by weight or more.

12. The separator for a lead acid battery according to claim 1, wherein the micro-glass fiber has a number average fiber diameter of 4.5 $\mu$m or less.

13. The separator for a lead acid battery according to claim 1, wherein a total blending amount of the micro-glass fiber and the heat-fusible organic fiber is 60% by weight or more.

14. A lead acid battery, comprising the separator for a lead acid battery according to any one of claims 1 to 13.

## INTERNATIONAL SEARCH REPORT

| International application No. |
|---|
| **PCT/JP2023/026989** |

**A.    CLASSIFICATION OF SUBJECT MATTER**

*H01M 50/466*(2021.01)i; *H01M 50/414*(2021.01)i; *H01M 50/417*(2021.01)i; *H01M 50/437*(2021.01)i; *H01M 50/44*(2021.01)i; *H01M 50/489*(2021.01)i; *H01M 50/494*(2021.01)i

FI:    H01M50/466; H01M50/414; H01M50/417; H01M50/437; H01M50/44; H01M50/489; H01M50/494

According to International Patent Classification (IPC) or to both national classification and IPC

**B.    FIELDS SEARCHED**

Minimum documentation searched (classification system followed by classification symbols)

H01M50/466; H01M50/414; H01M50/417; H01M50/437; H01M50/44; H01M50/489; H01M50/494

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| X | JP 2009-245901 A (NIPPON SHEET GLASS CO LTD) 22 October 2009 (2009-10-22) claim 1, examples | 1, 3-7, 10-14 |
| Y | | 2, 8-9 |
| Y | WO 2019/198499 A1 (ASAHI KASEI KABUSHIKI KAISHA) 17 October 2019 (2019-10-17) paragraphs [0028]-[0029], [0033], examples | 2, 8-9 |
| A | WO 2019/198500 A1 (ASAHI KASEI KABUSHIKI KAISHA) 17 October 2019 (2019-10-17) entire text | 1-14 |

☐ Further documents are listed in the continuation of Box C.    ☑ See patent family annex.

| | |
|---|---|
| \*    Special categories of cited documents:<br>"A"    document defining the general state of the art which is not considered to be of particular relevance<br>"E"    earlier application or patent but published on or after the international filing date<br>"L"    document which may throw doubts on priority claim(s) or which is cited to establish the publication date of another citation or other special reason (as specified)<br>"O"    document referring to an oral disclosure, use, exhibition or other means<br>"P"    document published prior to the international filing date but later than the priority date claimed | "T"    later document published after the international filing date or priority date and not in conflict with the application but cited to understand the principle or theory underlying the invention<br>"X"    document of particular relevance; the claimed invention cannot be considered novel or cannot be considered to involve an inventive step when the document is taken alone<br>"Y"    document of particular relevance; the claimed invention cannot be considered to involve an inventive step when the document is combined with one or more other such documents, such combination being obvious to a person skilled in the art<br>"&"    document member of the same patent family |

| Date of the actual completion of the international search | Date of mailing of the international search report |
|---|---|
| **27 September 2023** | **10 October 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
**Information on patent family members**

International application No.

**PCT/JP2023/026989**

| Patent document cited in search report | | | Publication date (day/month/year) | Patent family member(s) | | | Publication date (day/month/year) |
|---|---|---|---|---|---|---|---|
| JP | 2009-245901 | A | 22 October 2009 | (Family: none) | | | |
| WO | 2019/198499 | A1 | 17 October 2019 | (Family: none) | | | |
| WO | 2019/198500 | A1 | 17 October 2019 | US | 2021/0036290 | A1 | |
| | | | | EP | 3780148 | A1 | |
| | | | | CN | 112005404 | A | |

Form PCT/ISA/210 (patent family annex) (January 2015)

## EP 4 564 579 A1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP S57098975 A
- JP H06176749 A
- JP H09017406 A
- JP 2003100276 A
- JP H02141955 U
- JP 2004127578 A
- JP 2005108617 A
- JP 2003297328 A
- JP 2009245901 A
- JP 6518094 B
- JP 4261821 B